Europäisches Patentamt

European Patent Office

Office européen des brevets

(11) Publication number: **0 485 034 A1**

# EUROPEAN PATENT APPLICATION

(21) Application number: **91202876.8**

(22) Date of filing: **06.11.91**

(51) Int. Cl.5: **B25B 25/00**, F16G 11/12

(30) Priority: **08.11.90 NL 9002429**

(43) Date of publication of application:
**13.05.92 Bulletin 92/20**

(84) Designated Contracting States:
**AT BE CH DE DK ES FR GB GR IT LI LU NL SE**

(71) Applicant: **Meijer, Hendrik**
**Watertorenweg 6**
**NL-7688 PZ Daarle(NL)**

(72) Inventor: **Meijer, Hendrik**
**Watertorenweg 6**
**NL-7688 PZ Daarle(NL)**

(54) **Device for handling elongate objects.**

(57) A device for handling elongate objects such as pipes, tubes, wires, chains, cables or the like, or elongate materials such as rope, barbed wire, wire, plastic or rubber hosing or the like, comprising:

a housing with an elongate continuous hole, through which an object or material can extend;

contact means for gripping the object or material and locking against displacement thereof relative to the housing;

hand-grip means for gripping the housing by hand.

FIG.1

Rank Xerox (UK) Business Services
(3.08/2.19/2.0)

The invention relates to the handling of elongate objects such as pipes, tubes, wires, chains, cables or the like, or elongate materials such as rope, barbed wire, wire, plastic or rubber hosing or the like.

It is known that for handling such objects or materials a great force is often required. The objects or materials are gripped by hand and moved over desired distances for instance by exerting a pulling force, for instance by unwinding from a roll. To protect the hands from injury use is frequently made of strong gloves. Even then the handling of many objects or materials still remains very laborious. For instance, even gloves are often not sufficient for handling barbed wire. Recourse is then had to gripping the material with tongs or a like tool that is unsuitable for this purpose.

The invention now provides a device for handling elongate objects such as pipes, tubes, wires, chains, cables or the like, or elongate materials such as rope, barbed wire, wire, plastic or rubber hosing or the like, comprising:

a housing with an elongate continuous hole, through which an object or material can extend;

contact means for gripping the object or material and locking against displacement thereof relative to the housing;

hand-grip means for gripping the housing by hand.

A very practical embodiment is that in which the housing is divisible in lengthwise direction such that the continuous hole is accessible from a longitudinal side.

The device can for instance have the feature that the housing consists of at least two parts which are pivotable round a pivot axis substantially parallel to the main longitudinal direction of the hole.

A very practical and reliable gripping is ensured with a device having the feature that the contact means are embodied as jaws movable by manual operation in the continuous hole to the wall or towards one another, respectively.

In preference the device has the special feature that the jaws are controllable by at least one actuating part present on the outside of the housing.

In a particular embodiment the device can have the special feature that the actuating part is embodied such that when it is pressed in by hand the relevant jaw is carried to that position in which the object or material can be locked against displacement.

An embodiment having the special feature that the actuating part is an arm which is coupled pivotally to the housing and extends on the same side as the jaw relative to the pivot axis has the advantage that gripping of the object or material and handling thereof by the device according to the invention can take place with one hand.

The device preferably has the feature that the housing is embodied as a divided tube. A tube has the advantage of having comparatively small peripheral dimensions, whereby it allows of easy manual handling.

In a particular embodiment the device has the characteristic that the continuous hole broadens outward on at least one end. In a further development hereof the device has the feature that the broadening is progressive.

In order to keep the device in reliable contact with a handled object or material it may have the feature that at least two of the parts comprise a clamping jaw and that closing means are present for holding the device in the closed position counter to the opening action of the jaws.

A practical embodiment is that in which the jaws are constrained by spring means to their inactive rest position.

An embodiment intended solely for gripping objects or materials can have the characteristic that the jaws are clamping jaws. Using such a device the flow through a flexible hose can be blocked or dosed. The device may for instance also serve for marking an object such as by perforating or profiling.

In a particular embodiment the device has the characteristic that the or each jaw can be held in its clamping position by axial movement of the housing. In this case the jaws are for instance slidable in the housing and are constrained during exerting of a tensile force on a clamped object or material to a radial position such that the object is held fixed by wedging action.

A very easy feeding of object or material into the device is ensured with an embodiment in which the housing is embodied as a tube having on both ends a broadening whereof the inner surface connects smoothly onto the inner surface of the tube, and that each of both broadenings carries on its end a hinge, which hinges have a common pivot axis.

In order to prevent a user catching his skin between the mutually facing edges of the two parts a variant has the characteristic that mutually facing edges of the two parts lie abutting in the closed position of the device with a first portion located radially to the inside, onto which first portion connects a portion located radially more to the outside, the facing surfaces of which lie at a mutual interval.

It may be practical to be able to couple the device fixedly to a object or material without a clamping force to be exerted by the hands always being required for this purpose. To this end a variant is characterized by locking means for locking the jaws in the active position.

This variant can have the particular feature that the locking means comprise a spring-loaded, tiltable locking Paul controllable from outside which extends into a space between an actuating part and the housing, which locking pawl in its inactive position presses under spring-loading against a stop present on the actuating part, can be removed from this position by tilting as a result of being pressed in from outside and which in its active position blocks outward oriented displacement of the actuating part relative to the housing.

The invention will now be elucidated with reference to the annexed drawing, in which:
figure 1 shows a perspective view of a device according to the invention;
figure 2 shows the device of figure 1 in opened situation;
figure 3 shows examples of other objects which can be handled with the device according to the invention;
figures 4a, b, c show three positions of the device according to the invention in longitudinal section;
figure 5 is a longitudinal sectional view corresponding with figure 4a of a variant; and
figure 6 is a view corresponding with figure 1 of a further variant.

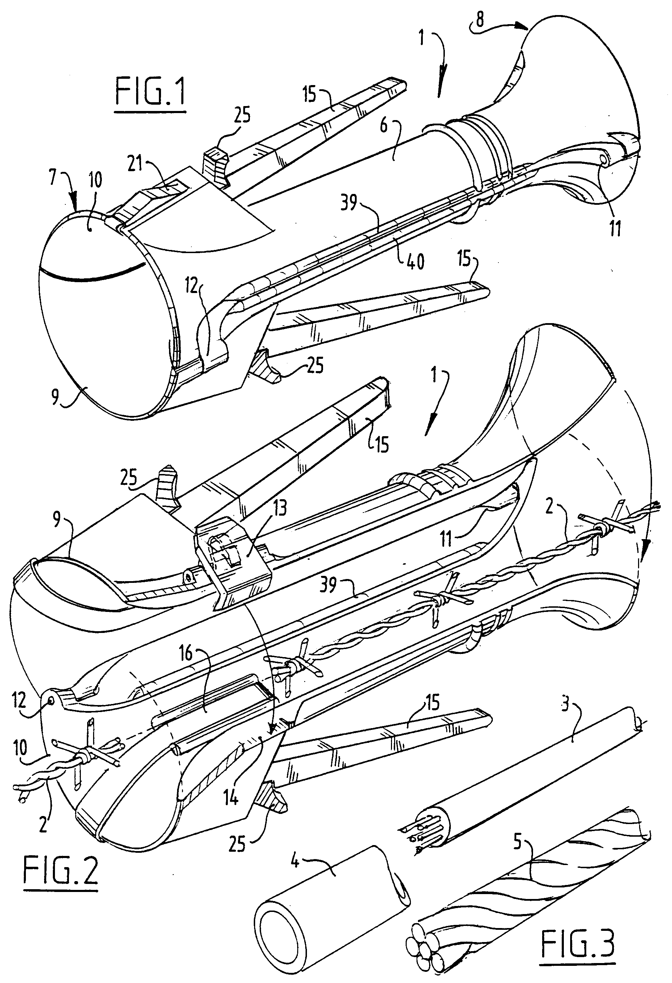

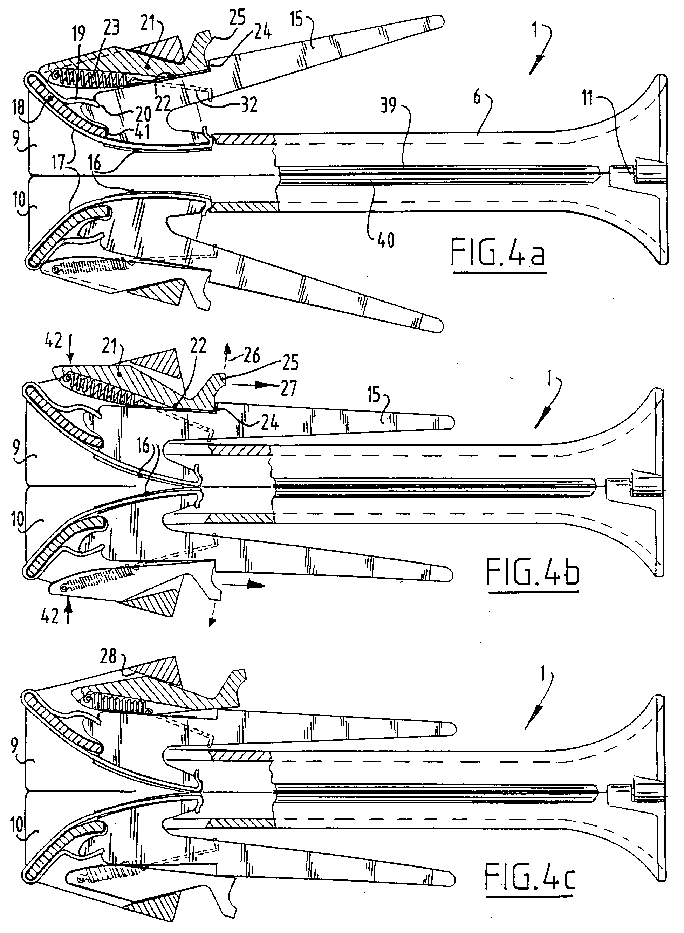

Figure 1 shows a device 1 for handling for instance barbed wire 2 (see figure 2) or cable 3, tubing or hose 4 or rope 5 (see figure 3).

The device 1 is embodied as a tube 6 with a broadened portion 7, 8 connecting smoothly thereon at both ends.

The tube 6, 7, 8 consists of two parts 9, 10 mutually connected by means of hinges 11, 12 which are arranged on the broadened portions 8, 9 and have a common pivot axis. The device 1 can thus be opened in the manner shown in figure 2, whereby the inside is accessible for the object or material for handling 2, 3, 4, 5. By means of a spring-loaded stop member 13 on the part 9 which can co-act with a locking edge 14 on the part 10 the device 1 can be held in its closed position as according to figure 1.

By means of hand-grips, both designated 15, clamping jaws 16 can be moved towards one another in the tube 6. In this respect reference is further made to figure 4.

Figure 4a shows the device 1 in its inactive position in which the clamping jaws 16 are situated at a mutual interval. This position is a rest position under the influence of spring force which is exerted by a metal strip 17 that extends around a portion 18 of the housing. The end 19 of the strip 17 bent round this portion engages onto the leading part 20 of the hand-grip 15. This leading part can pivot round an edge 41 on the inner side of the hand-grip 15. The pivot edge 41 forms part of the part 18 of device 1.

Figure 4b shows the situation in which the hand-grips 15 are pressed radially inward such that the clamping jaws 16 are situated in their clamping position in which an object or material can be gripped clampingly.

For locking the hand-grips 15, and therefore the clamping jaws 16, in this position the device 1 comprises a locking pawl 21 which can tilt relative to the hand-grips 15 round a tilt edge 22 and which lies against a stop edge 24 under the influence of a draw spring 23. The spring 23 is connected on one side by means of an anchoring 32 to the hand-grip 15 and on the other side to the locking pawl 21. In the configuration shown in figure 4a, 4b the pawl 21 is thus jointly movable with the hand-grip 15. By applying a pressure force according to the arrows 42 tilting of the locking pawl 21 round the tilt edge 22 takes place whereby the rear portion 25 of pawl 21 moves upward (arrow 26), disengages from the stop edge 24 and, under the influence of the spring force of spring 23, displaces as according to arrow 27 over the surface of the hand-grip 15. Instead of applying a pressure force according to arrows 42 the user can also displace the rear portions 25 outward for instance with the index finger or thumb. This enables operation with one hand. The situation shown in figure 4c has now been reached. In this position the locking pawl is on one side in engagement with the outer surface of the hand-grip 15 and on the other side with a locking surface 28 present on the housing 9, 10. The return outward displacement of the hand-grips 15 is hereby prevented.

The setting of the locking pawl 21, and therewith the position of the jaws 16, can be continuously selected.

In order to return the device to the position of figure 4a the user must move the rear portions 25 towards the front, whereby the locking pawls 21 are again brought into co-action with the stop edges 24.

The parts 9, 10 have on their mutually facing edges on the side of the hinges 11, 12 rounded, widened edge zones 39, 40. The parts of these co-acting edge zones located further to the outside have a mutual distance such that a user does not risk getting his skin caught between these edges during closing of the device.

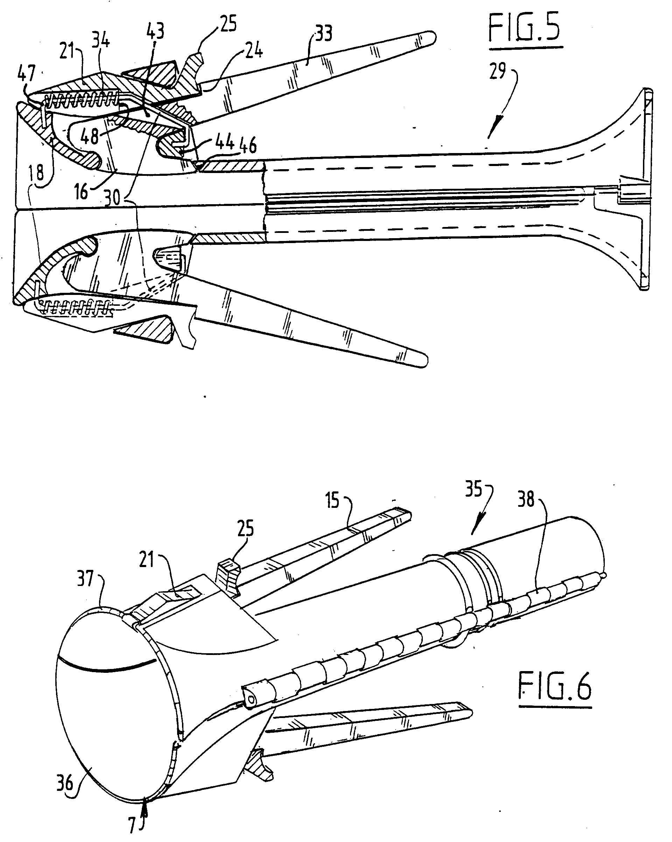

Figure 5 shows a device 29 which varies from the embodiment shown above in the sense that a resilient strip 30 which, as in the device according to figure 1, can be manufactured from spring steel, is anchored with one end in part 18 and is anchored with its other end in a removable locking block 44 via a through-hole 43 in the actuating part 33, which block is positioned between the hand-grip 33 and the jaw 16. When part 33 is pressed in, the free surface 45 moves at a small distance along the edge 46 of the housing. Partly due to the clamping action of the spring steel strip 30 the part 33 is hereby held in position, also in the case of pivoting movement. A pressure spring arranged round the strip 30 pushes the locking pawl 21 via the stop 47 to the stop edge 24. The pressure spring 34 is enclosed under tension between the surface 48 and the stop 47 on the strip 30.

Figure 6 shows a variant. The device 35 comprises only one broadened portion 7. The two parts 36, 37 are hingeably connected to one another by means of an elongate hinge 38.

**Claims**

1. Device for handling elongate objects such as pipes, tubes, wires, chains, cables or the like, or elongate materials such as rope, barbed wire, wire, plastic or rubber hosing or the like, comprising:

    a housing with an elongate continuous hole, through which an object or material can extend;

    contact means for gripping the object or material and locking against displacement thereof relative to the housing;

    hand-grip means for gripping the housing by hand.

2. Device as claimed in claim 1, **characterized in that** the housing is divisible in lengthwise direction such that the continuous hole is accessible from a longitudinal side.

3. Device as claimed in claim 2, **characterized in that** the housing consists of at least two parts which are pivotable round a pivot axis substantially parallel to the main longitudinal direction of the hole.

4. Device as claimed in claim 1, **characterized in that** the contact means are embodied as jaws movable by manual operation in the continuous hole to the wall or towards one another, respectively.

5. Device as claimed in claim 4, **characterized in that** the jaws are controllable by at least one actuating part present on the outside of the housing.

6. Device as claimed in claim 5, **characterized in that** the actuating part is embodied such that when it is pressed in by hand the relevant jaw is carried to that position in which the object or material can be locked against displacement.

7. Device as claimed in claim 6, **characterized in that** the actuating part is an arm which is coupled pivotally to the housing and extends on the same side as the jaw relative to the pivot axis.

8. Device as claimed in claim 1**, characterized in that** the housing is embodied as a divided tube.

9. Device as claimed in claim 1, **characterized in that** the continuous hole broadens towards the outside on at least one end.

10. Device as claimed in claim 9, **characterized in that** the broadening is progressive.

11. Device as claimed in claims 3 and 4, **characterized in that** at least two of the parts comprise a clamping jaw and that closing means are present for holding the device in the closed position counter to the opening action of the jaws.

12. Device as claimed in claim 4, **characterized in that** the jaws are constrained by spring means to their inactive rest position.

13. Device as claimed in claim 4, **characterized in that** the jaws are clamping jaws.

14. Device as claimed in claim 13, **characterized in that** the or each jaw can be held in its clamping position by axial movement of the housing.

15. Device as claimed in claims 3 and 9, **characterized in that** the housing is embodied as a tube having on both ends a broadening whereof the inner surface connects smoothly onto the inner surface of the tube, and that each of both broadenings carries on its end a hinge, which hinges have a common pivot axis.

16. Device as claimed in claim 3, **characterized in that** mutually facing edges of the two parts lie abutting in the closed position of the device with a first portion located radially to the inside, onto which first portion connects a portion located radially more to the outside, the mutually facing surfaces of which lie at a mutual interval.

17. Device as claimed in claim 7, **characterized by** locking means for locking the jaws in the active position.

18. Device as claimed in claim 17, **characterized in that** the locking means comprise a spring-loaded, tiltable locking pawl controllable from outside which extends into a space between an actuating part and the housing, which locking pawl in its inactive position presses under spring-loading against a stop present on the actuating part, can be removed from this position by tilting as a result of pressing in from outside and which in its active position blocks the outward oriented displacement of the actuating part relative to the housing.

FIG.1

FIG.2

FIG.3

FIG.4a

FIG.4b

FIG.4c

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 723 800 (F.G.SANDERS)<br>* abstract; figures 2-4 *<br>--- | 1-3,8,11 | B25B25/00<br>F16G11/12 |
| X | NTIS TECH NOTES<br>DECEMBER 1988, SPRINGFIELD, VA US, PAGE 1050<br>G.C.MARSHALL: TOOL EXTRACTS SMOOTH,FRAGILE TUBES<br>* THE WHOLE DOCUMENT *<br>--- | 1-3,8,11 | |
| X | DE-A-3 416 652 (W.CIELKER)<br><br>* page 11, line 22 - page 12, line 19; figure 2 *<br>--- | 1,4-7,<br>12,13 | |
| X<br>A | US-A-1 880 431 (J.W.GOOGALL)<br>* page 2, line 10 - line 27; figure 1 *<br><br>--- | 1,4,5,13<br>2,9,10,<br>17 | |
| X | EP-A-0 285 699 (W. CIELKER)<br>* abstract; figures 1,5,6 *<br>--- | 1,4-7,14 | |
| X | FR-A-954 875 (J.-B.-H.SAUVAGE)<br>* page 1, line 33 - page 2, line 26; figures 1,2 *<br><br>--- | 1,4-7 | TECHNICAL FIELDS SEARCHED (Int. Cl.5)<br><br>B25B<br>F16G<br>H02G |
| X | DE-U-8 632 424 (V.MARKL)<br>* claim 1; figures 1,2,5 *<br>--- | 1 | |
| A | US-A-2 606 466 (J.A.WRIGHT)<br>* column 3, line 7 - line 15; figure 1 *<br>--- | 17 | |
| A | US-A-3 018 531 (J.J.ARSENAULT)<br>* column 4, line 31 - line 38; figure 6 *<br>--- | 1,12 | |
| A | DE-A-2 926 986 (J.HENKENJOHANN)<br>--- | | |
| A | US-A-2 607 095 (A.G.MAASDAM)<br><br>----- | | |

The present search report has been drawn up for all claims

| Place of search | Date of completion of the search | Examiner |
|---|---|---|
| THE HAGUE | 05 FEBRUARY 1992 | MAJERUS H.M.P. |

EPO FORM 1503 03.82 (P0401)